**Europäisches Patentamt**

(19) **European Patent Office**

**Office européen des brevets**

(11) Numéro de publication: **0 169 138**
**B1**

(12) **FASCICULE DE BREVET EUROPEEN**

(51) Int. Cl.⁴: **B 60 K 23/02,** G 05 G 1/14

(45) Date de publication du fascicule du brevet:
**18.01.89**

(21) Numéro de dépôt: **85401382.8**

(22) Date de dépôt: **08.07.85**

(54) Commande de débrayage pour véhicule automobile, équipée d'un ressort d'assistance.

(30) Priorité: **20.07.84 FR 8411602**

(43) Date de publication de la demande:
**22.01.86 Bulletin 86/4**

(45) Mention de la délivrance du brevet:
**18.01.89 Bulletin 89/3**

(84) Etats contractants désignés:
**DE GB IT**

(56) Documents cités:
**DE-A- 2 262 878**
**DE-B- 1 186 752**
**FR-A- 2 380 160**
**US-A- 3 774 471**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Hauguel, Fabrice, 13 allée Vercingétorix, F-95250 Beauchamp (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

La présente invention a pour objet une commande de débrayage pour véhicule automobile, comprenant une pédale de débrayage qui pivote, sur un axe porté par un support fixé à la structure du véhicule, entre une position de repos et une position active correspondant au débrayage, ainsi qu'un ressort d'assistance maintenu comprimé entre une partie de la pédale et une partie fixe, relativement à la structure du véhicule, de telle sorte que la ligne d'action du ressort, sensiblement orthogonale à l'axe de la pédale, soit proche de cet axe en position de repos et s'en écarte, quand la pédale est actionnée, du côté correspondant à une action du ressort sur la pédale dans le sens du débrayage.

Dans les réalisations connues (FR-A1 2 380 160), la partie fixe sur laquelle prend appui le ressort est le support précité ou une pièce solidaire de celui-ci. La force du ressort étant relativement importante afin de jouer le rôle d'assistance, le support et/ou ladite pièce doit être particulièrement résistant, donc lourd et coûteux. Par ailleurs, lors du montage de l'ensemble du pédalier et du support, la pédale étant habituellement stabilisée dans sa position de repos par rapport au support, son passage par une ouverture d'un panneau de la structure du véhicule n'est généralement possible que si cette ouverture est largement dimensionnée, ainsi que le support qui la recouvre. Il peut en résulter, en plus d'un encombrement compliquant le montage, une difficulté d'étanchéité entre le support et le panneau, celui-ci séparant en général de l'habitacle du véhicule un compartiment moteur.

L'invention a pour but de remédier à ces inconvénients en réalisant une commande de débrayage du type ci-dessus, qui soit efficace, fiable et aisée à fixer sur la structure du véhicule, l'ensemble pédale et ressort étant notamment préassemblé sur le support, puis monté sur un panneau de la structure en faisant passer la pédale par une ouverture de ce panneau avant de fixer le support autour de l'ouverture. Un tel mode d'assemblage est en particulier souhaitable lorsque ledit ensemble est associé à un pédalier de freinage assisté comportant une pédale juxtaposée à celle de débrayage, et un dispositif d'assistance pneumatique relativement volumineux, solidaire du support et disposé du côté du panneau opposé aux pédales.

Suivant l'invention, la partie fixe sur laquelle prend appui le ressort est une extrémité libre d'une pièce intermédiaire dont une partie est montée pivotante sur l'axe de la pédale et l'autre partie est fixée, lors du montage de la commande au support, par un moyen d'accrochage maintenant ainsi en butée ladite pièce intermédiaire contre le support.

Il s'ensuit que la force du ressort s'exerce sur cette pièce intermédiaire et sur l'axe de la pédale, et non seulement sur le support, lequel subit moins de contraintes qu'usuellement, donc est plus fiable et réalisable plus léger et plus simple.

Selon d'autres caractéristiques avantageuses de l'invention:

- la pièce intermédiaire comporte deux flasques perpendiculaires à l'axe de la pédale et reliés par un pontet parallèle à cet axe et muni d'un rebord susceptible de venir s'accrocher à l'extrémité crochue d'une patte légèrement élastique constituant le moyen d'accrochage rapide précité;

- la pièce intermédiaire est agencée de telle sorte que, avant fixation du support sur le véhicule, en particulier lors du montage de l'ensemble pédalier et support à travers une ouverture d'un panneau, l'extrémité libre de la pièce intermédiaire peut être maintenue à proximité de la pédale par basculement du ressort d'assistance, de manière que sa ligne d'action soit écartée de l'axe de la pédale du côté opposé à celui correspondant au débrayage;

- le ressort est hélicoïdal et partiellement logé dans un boîtier cylindrique solidaire d'un axe diamétral monté pivotant sur l'extrémité libre de la pièce intermédiaire.

Cette disposition permet de rapprocher cette extrémité de la partie de la pédale sur laquelle prend appui le ressort. Il en résulte d'importantes variations angulaires de la ligne d'action du ressort, et par suite une assistance particulièrement efficace.

D'autres particularités et avantages de l'invention apparaîtront au cours de la description qui va suivre, faite en référence aux dessins annexés qui en illustrent à titre d'exemple non limitatif un mode de réalisation:

- la Figure 1 est une vue en perspective d'un mode de réalisation du dispositif de commande de débrayage pour véhicule automobile selon l'invention;

- la Figure 2 est une vue en coupe longitudinale dans le plan médian de la pédale de débrayage, de la commande de débrayage de la Figure 1, à échelle agrandie, représentée montée sur le véhicule et la pédale étant en position de repos;

- la Figure 3 est une vue analogue à la Figure 2 mais à échelle réduite, montrant le dispositif de commande de débrayage lorsque la pédale a été enfoncée pour la mettre en position active de débrayage;

- la Figure 4 est une vue analogue aux Figures 2 et 3 représentant la situation de la commande de débrayage durant son montage sur le véhicule et avant accrochage de la pièce intermédiaire à ce dernier.

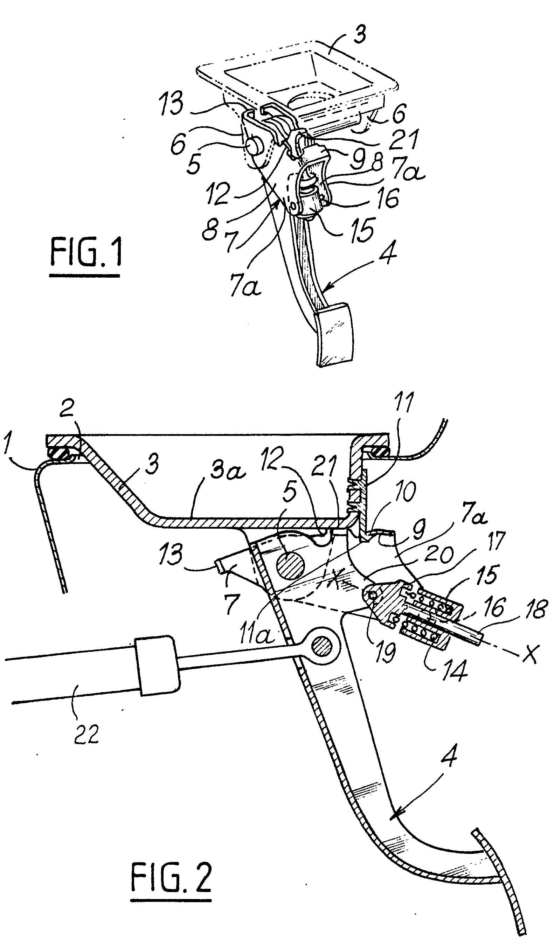

La commande de débrayage pour véhicule automobile représentée aux dessins comprend une pédale 4 de débrayage montée à pivotement sur un axe 5 porté par un support 3 fixé à un panneau 1 de la structure du véhicule. La pédale 4 est munie d'une butée supérieure 21 en appui contre le support 3 lorsque la pédale 4 est en position de repos (Figure 2). Le support 3 est engagé dans une ouverture 2 du panneau 1 prévue à cet effet, avec l'interposition d'un joint d'étanchéité. Ce support est destiné à recevoir une pédale de freinage près de la pédale 4 et un dispositif d'assistance de freinage sur sa face supérieure 3a.

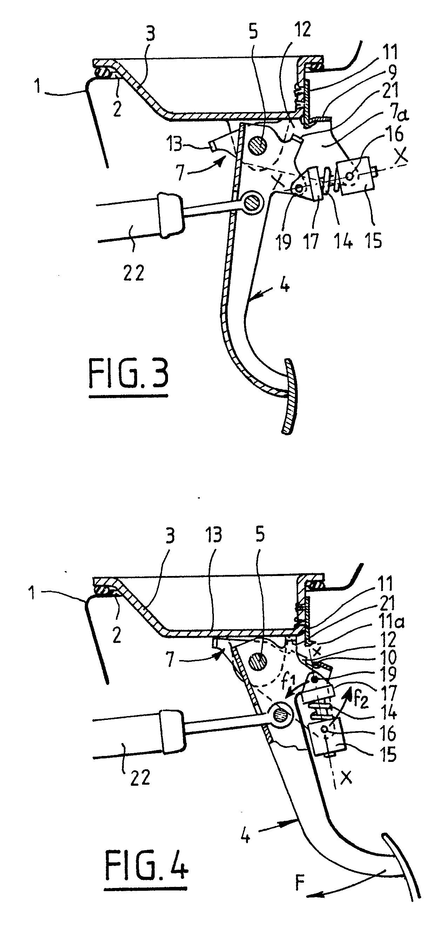

Cette commande comprend également un ressort 14 d'assistance au débrayage, maintenu comprimé entre une partie de la pédale 4 et une partie fixe, de telle sorte que la ligne d'action X–X du ressort 14, sensiblement orthogonale à l'axe 5 de la pédale 4, soit proche de cet axe 5 en position de repos (Figure 2) et s'en écarte lorsque la pédale 4 est actionnée (position active de débrayage de la Figure 3), du côté correspondant à une action du ressort 14 sur la pédale 4 dans le sens du débrayage.

L'axe 5 est porté par deux paliers 6 du support 3, et une tige d'actionnement d'un maître cylindre 22 de débrayage est articulée sur la pédale 4.

Le ressort 14 est hélicoïdal et monté coaxialement à une tige axiale 18 de guidage qui traverse un boîtier cylindrique 15 dans lequel est logé partiellement le ressort 14, cette tige 18 étant solidaire d'une coupelle 17 d'appui du ressort 14, montée pivotante autour d'un axe 19 porté par deux pattes parallèles 20 de la pédale 4.

Suivant une caractéristique essentielle de l'invention, la partie fixe sur laquelle prend appui le ressort 14 est une extrémité libre d'une pièce intermédiaire 7 montée pivotante sur l'axe 5 de la pédale 4, et immobilisée en rotation, après montage de la commande, par un moyen d'accrochage au support 3 maintenant en butée ce dernier contre ladite pièce intermédiaire 7. Dans l'exemple décrit, ce moyen d'accrochage est constitué par une patte 11 légèrement élastique rendue solidaire du support 3 par exemple par rivetage, et qui comporte une extrémité inférieure saillante et crochue 11a sur lequel peut venir s'encliqueter une partie correspondante de la pièce intermédiaire 7 lors du montage de la commande, comme cela sera décrit plus en détail ci-après.

La pièce intermédiaire 7 comporte deux flasques 7a perpendiculaires à l'axe 5 de la pédale et reliés par un pontet 9 parallèle à cet axe 5 muni d'un rebord 10 susceptible de venir s'accrocher à l'extrémité crochue 11a lors du montage (Figure 4). A l'extrémité libre de la pièce 7, le boîtier cylindrique 15 est monté pivotant entre les flasques 7a au moyen d'un axe diamétral 19 parallèle à l'axe 5.

La pièce intermédiaire 7 est pourvue de deux butées, à savoir une première butée 12, formée par exemple par des parties saillantes des bords supérieurs des flasques 7a et en appui sur le support 3 en utilisation sur le véhicule (Figures 2 et 3), et une seconde butée 13, formée par exemple par les parties terminales des flasques 7a opposées au pontet 9, et qui est en appui sur le support 3 avant fixation sur le véhicule (Figure 4).

La pièce intermédiaire 7 est agencée de telle sorte que, avant fixation du support 3 sur le véhicule, et en particulier lors du montage de l'ensemble pédalier et support 3 (Figure 1) à travers l'ouverture 2 du panneau 1, l'extrémité libre de la pièce intermédiaire 7 peut être maintenue à proximité de la pédale 4 par basculement du ressort 14 d'assistance dans un sens tel que sa ligne d'action, matérialisée par l'axe X–X (Figure 4), soit écartée de l'axe 5 de la pédale 4 du côté opposé à celui correspondant au débrayage, c'est-à-dire passe nettement au-dessus de l'axe 5. De ce fait, le ressort 14 pousse l'axe 19 vers le haut, assurant le contact de la butée 21 de la pédale 4 contre le support 3, et il pousse vers le bas l'axe 16, ce qui assure le contact de la butée 13 de la pièce 7 contre le support 3.

Pour passer de cette position à celle d'utilisation, il suffit d'enfoncer la pédale (flèche F sur la Figure 4). Il s'ensuit un basculement de la ligne X–X suivant la flèche f1, puis quand cette ligne X–X passe au-dessous de l'axe 5, le ressort 14 poussant vers la droite l'axe 16, la pièce intermédiaire 7 bascule autour de l'axe 5 dans le sens de la flèche f2, jusqu'à ce que sa butée 12 vienne en contact avec le support 3, tandis que le rebord 10 du pontet 9 s'accroche à l'extrémité inférieure crochue 11a de la patte 11, avec légère flexion élastique de cette dernière.

La commande de débrayage est alors en position de repos (Figure 2) prête à l'utilisation. La ligne d'action X–X du ressort 14 passe sensiblement par l'axe de rotation 5 de la pédale 4, de sorte que le ressort 14 n'a pas d'action sur celle-ci.

En variante, la ligne X–X peut passer légèrement au-dessus de l'axe 5 quand la commande est en position de repos, de sorte que le ressort 14 tend à maintenir la pédale 4 dans cette position, mettant sa butée 21 en contact avec le support 3.

Le pédalier étant en position d'utilisation lorsqu'on enfonce la pédale 4 dans sa position active de débrayage (Figure 3) en la faisant basculer autour de l'axe de rotation 5, l'axe 19 porté par la pédale s'abaissant, le boîtier 15 et la coupelle 17 d'appui du ressort d'assistance 14 basculent vers le bas autour de l'axe 16 porté par l'extrémité libre de la pièce intermédiaire 7 fixe, de sorte que la ligne d'action X–X du ressort 14 passe nettement au-dessous de l'axe 5. De ce fait, le ressort 14 agit sur la pédale 4 dans le sens du débrayage et apporte donc une assistance à celui-ci.

**Revendications**

1. Commande de dèbrayage pour véhicule automobile, comprenant une pédale (4) de débrayage qui pivote, sur un axe (5) porté par un support (3) fixé à la structure du véhicule, entre une position de repos et une position active correspondant au débrayage, ainsi qu'un ressort (14) d'assistance maintenu comprimé entre une partie de la pédale (4) et une partie fixe, relativement à la structure du véhicule, de telle sorte que la ligne d'action (X–X) du ressort (14), sensiblement orthogonale à l'axe (5) de la pédale (4), soit proche de cet axe (5) en position de repos et s'en écarte, quand la pédale (4) est actionnée, du côté correspondant à une action du ressort (14) sur la pédale (4) dans le sens du débrayage, caractérisée en ce que la partie fixe sur laquelle prend appui le ressort (14) est une extrémité libre d'une pièce intermédiaire (7) dont une partie est montée pivotante sur l'axe (5) de la pédale (4) et l'autre partie est fixée lors du montage de la commande au support (3) par un moyen d'accrochage (11) maintenant ainsi en butée ladite pièce intermédiaire (7) contre le support (3).

2. Commande selon la revendication 1, caractérisée en ce que la pièce intermédiaire (7) comporte deux flasques (7a) perpendiculaires à l'axe (5) de la pédale (4) et reliés par un pontet (9) parallèle à cet axe (5) et muni d'un rebord (10) susceptible de venir s'accrocher à l'extrémité crochue d'une patte (11) légèrement élastique constituant avec le rebord (10) le moyen d'accrochage précité.

3. Commande selon l'une des revendications 1 et 2, caractérisée en ce que la pièce intermédiaire (7) est agencée de telle sorte que, avant fixation du support (3) sur le véhicule, et en particulier lors du montage de l'ensemble pédalier et support (3) à travers une ouverture (2) d'un panneau, l'extrémité libre de la pièce intermédiaire (7) peut être maintenue à proximité de la pédale (4) par basculement du ressort (14) d'assistance de manière que sa ligne d'action soit écartée de l'axe (5) de la pédale (4) du côté opposé à celui correspondant au débrayage.

4. Commande selon l'une des revendications 1 à 3, caractérisée en ce que le ressort (14) est hélicoïdal et partiellement logé dans un boîtier cylindrique (15) solidaire d'un axe diamétral (16) monté pivotant sur l'extrémité libre de la pièce intermédiaire (7).

5. Commande selon l'une des revendications 1 à 4, caractérisée en ce que la pièce intermédiaire (7) est pourvue de deux butées à savoir, une première butée (12) en appui contre le support (3) en utilisation sur le véhicule, et une seconde butée (13) en appui sur le support (3) avant fixation sur le véhicule.

## Claims

1. A declutching control for a motor vehicle, comprising a clutch pedal (4) which pivots between an inoperative position and an operative position corresponding to declutching on a pivot (5) borne by a support (3) attached to the vehicle structure, and a booster spring (14) is so retained compressed between a portion of the pedal (4) and a part fixed in relation to the vehicle that the line of action (X–X) of the spring (14), substantially at a right angle to the pivot (5) of the pedal (4), is close to the pivot (5) in the inoperative position and moves away from the pivot when the pedal (4) is actuated on the side corresponding to the spring (14) acting on the pedal (4) in the declutching direction, characterized in that the fixed part against which the spring (14) bears is a free end of an intermediate member (7) one portion of which is mounted pivotably on the pivot (5) of the pedal (4), the other portion being fixed to the support (3) via an attaching means (11) during assembly of the control, thus retaining the intermediate member (7) in abutment against the support (3).

2. A control according to claim 1, characterized in that the intermediate member (7) comprises two flanges (7a) perpendicular to the pivot (5) of the pedal (4) and interconnected via a connecting strap (9) which is parallel with the pivot (5) and has a rim (10) adapted to be attached to the hooked end of a slightly resilient lug (11) cooperating with the rim (10) to form said attaching means.

3. A control according to one of claims 1 and 2, characterized in that the intermediate member (7) is so devised that prior to the attachment of the support (3) to the vehicle, and more particularly during the mounting of the assembly formed by the pedal unit and the support (3) through an opening (2) in a panel, the free end of the intermediate member (7) can be retained adjacent the pedal (4) by so tilting the booster spring (14) that its line of action is moved away from the pivot (5) of the pedal (4) on the side opposite to that corresponding to declutching.

4. A control according to any of claims 1 to 3, characterized in that the spring (14) is helical and partially received in a cylindrical casing (15) connected to a diametrical pivot (16) mounted to pivot on the free end of the intermediate member (7).

5. A control according to any of claims 1 to 4, characterized in that the intermediate member (7) has two abutments namely a first abutment (12) bearing against the support (3) when used on the vehicle, and a second abutment (13) bearing against the support prior to attachment to the vehicle.

## Patentansprüche

1. Kupplungsbetätigungsvorrichtung für ein Kraftfahrzeug mit einem Kupplungspedal (4), das zwischen einer Ruhestellung und einer aktiven Stellung, die dem Ausrücken der Kupplung entspricht, um eine Achse (5) schwenkbar ist, die von einem fest am Aufbau des Fahrzeuges angebrachten Halter (3) gehalten ist, sowie mit einer Servofeder (14), die zusammengedrückt zwischen einem Teil des Pedals (4) und einem relativ zum Aufbau des Fahrzeuges fest angeordneten Teil gehalten ist, derart, dass die zur Achse (5) des Pedals (4) im wesentlichen orthogonale Wirkungslinie (X–X) der Feder (14) nahe dieser Achse (5) in der Ruhestellung verläuft und bei einer Betätigung des Pedals (4) sich in eine Richtung wegbewegt, die einer Einwirkung der Feder (14) auf das Pedal (4) im Sinne eines Ausrückens der Kupplung entspricht, dadurch gekennzeichnet, dass der fest angeordnete Teil, an dem sich die Feder (14) abstützt, ein freies Ende eines Zwischenstücks (7) ist, dessen einer Teil schwenkbar an der Achse (5) des Pedals (4) angebracht ist, und dessen anderer Teil während der Montage der Betätigungsvorrichtung am Halter (3) über eine Anschlageinrichtung (11) fest angebracht ist, die somit das Zwischenstück (7) gegen den Halter (3) im Anschlag hält.

2. Betätigungsvorrichtung nach Anspruch 1, dadurch gekennzeichnet, dass das Zwischenstück (7) zwei Flügel (7a) senkrecht zur Achse (5) des Pedals (4) umfasst, die über einen Bügel (9) parallel zur Achse (5) verbunden sind, der mit einer Leiste (10) versehen ist, der zum Anschlag an das hakenförmige Ende eines Beschlags (11) kommen kann, der etwas elastisch ist und mit der Leiste (10) die genannte Anschlageinrichtung bildet.

3. Betätigungsvorrichtung nach einem der Ansprüche 1 und 2, dadurch gekennzeichnet, dass das Zwischenstück (7) derart ausgebildet ist, dass vor der Befestigung des Halters (3) am Fahrzeug und insbesondere während der Montage der Pedalanordnung und des Halters (3) quer zu einer Öffnung (2) eines Bodenbleches das freie Ende des Zwischenstücks (7) in der Nähe des Pedals (4) durch ein Umkippen der Servofeder (14) in einer Weise gehalten werden kann, dass die Wirkungslinie sich von der Achse (5) des Pedals (4) in eine Richtung wegbewegt hat, die derjenigen Richtung entgegengesetzt ist, die dem Ausrücken der Kupplung entspricht.

4. Betätigungsvorrichtung nach einem der Ansprüche 1 bis 3, dadurch gekennzeichnet, dass die Feder (14) schraubenförmig ist und teilweise in einer zylindrischen Büchse (15) gelagert ist, die formschlüssig mit einer diametralen Achse (16) verbunden ist, die schwenkbar an dem freien Ende des Zwischenstücks (7) angebracht ist.

5. Betätigungsvorrichtung nach einem der Ansprüche 1 bis 4, dadurch gekennzeichnet, dass das Zwischenstück (7) mit zwei Anschlägen, nämlich einem ersten Anschlag (12), der am Halter (3) bei der Verwendung am Fahrzeug anliegt, und einem zweiten Anschlag (13) versehen ist, der am Halter (3) vor der Befestigung am Fahrzeug anliegt.

FIG.1

FIG.2

FIG.3

FIG.4